# DEMANDE DE BREVET EUROPEEN

(11) **EP 1 150 247 A1**
(43) Date de publication de la demande: **31.10.2001**
(21) Numéro de dépôt: 01460028.2
(22) Date de dépôt: 26.04.2001
(51) Int. Cl.: G06K 19/077, H04M 1/275

(54) **Procédé pour émettre et recevoir des signaux acoustiques au moyen d'un objet électronique nomade**

(30) Priorité: 26.04.2000 FR 0005347
(71) Demandeur: Audiosmartcard International S.A., 75008 Paris (FR)
(72) Inventeur: Moulin, Jean, 91260 Juvisy (FR); Gayet, Alain, 92400 Courbevoie (FR)
(74) Mandataire: Vidon, Patrice

(57) **Abrégé**

L'invention concerne un procédé pour émettre (6) et recevoir (7) des signaux acoustiques au moyen d'un objet électronique nomade (1) se présentant sous la forme d'une carte de crédit.

Ledit procédé comprend l'étape de réaliser dans l'épaisseur (4) de la carte un micro bobinage (2) parcouru par un courant électrique, coopérant par liaison électromagnétique avec une membrane souple et magnétisée (3) ou (3a).

Dans le cas où ledit objet nomade (1) comprend deux coques (1a) et (1b), entre lesquelles est inséré le micro bobinage (2), ledit procédé comprend l'étape de réaliser ladite membrane souple (3) ou (3a) par impression d'une couche magnétique sur la face interne (1c) ou (1d) d'au moins une des coques (1a)ou (1b).

Ainsi, au moyen du micro bobinage (2) et de la membrane souple (3) ou (3a) qui lui est associée, l'objet électronique nomade (1) peut capter (7) et produire (6) des signaux accoustiques.

## Description

Le domaine technique concerné par la présente invention est celui de l'émission et/ou de la réception de signaux acoustiques dans les objets nomades de petite taille.

Il est connu des objets nomades émettant des signaux acoustiques. De tels objets nomades ont notamment été décrits dans le brevet n° 9306679 du vingt neuf septembre mille neuf cent quatre vingt quinze et ayant pour titre "Dispositif de composition automatique de numéros de téléphone". Il a été en particulier décrit dans ce document un haut-parleur composé d'une feuille résonnante de type piezzo-céramique alimenté en énergie par une pile et dont le fonctionnement est contrôlé par un microprocesseur.

La production en grande série d'un objet nomade suppose de concilier simultanément une cadence de production élevée, un coût de revient faible et une très haute fiabilité. Ces trois paramètres sont le plus souvent dépendants du nombre de composants équipant ledit objet nomade et du nombre d'interconnexions qu'ils induisent. Lorsqu'ils se présentent sous la forme d'une carte de crédit, les objets nomades génèrent au surplus des contraintes physiques de format (carte de crédit) et d'épaisseur (0,8mm).

La réalisation d'un objet nomade au format carte de crédit, destiné à assurer à la fois la fonction de reconnaissance vocale et la fonction d'empreinte vocale suppose qu'on introduise au moins un microphone au sein de la carte.

De tels procédés de reconnaissance vocale sont dores et déjà commercialisé dans le grand public, comme par exemple le logiciel ViaVoice d'IBM.

Quant aux procédés mettant en oeuvre des techniques d'empreintes vocales, ils sont à un stade de développement industriel, comme par exemple les travaux de l'Université Pierre et Marie Curie à Paris ayant fait l'objet d'un brevet (N° d'enregistrement national à l'INPI 96 05566 du 03/05/96 et n° de publication 2 748 343).

Outre le risque d'affecter négativement un ou plusieurs des trois paramètres décrits ci-dessus, l'introduction de ce composant supplémentaire se heurte à l'heure actuelle à une autre difficulté. Les microphones existants sont d'une épaisseur incompatible avec celle d'une carte de crédit (format ISO). Par ailleurs, les buzzers piezzocéramiques, utilisés comme émetteurs de sons, présentent d'importantes fragilités en torsion.

La solution apportée, selon la présente invention, consiste en la fusion en un seul composant de la fonction microphone et de la fonction haut-parleur. Ce composant consiste en un micro bobinage possédant un grand nombre de spires, réalisé, par exemple, en fils isolés adhésifs directement posés sur le corps de la carte. Ce micro bobinage présente la caractéristique d'être réversible afin de pouvoir assurer alternativement la fonction de microphone et la fonction de haut-parleur. Aussi bien le nombre de composants que le nombre d'interconnexions nécessaires pour remplir les deux fonctions décrites s'en trouve divisé par deux.

Le procédé, selon l'invention, comprend l'étape de réaliser dans l'épaisseur d'un objet nomade un micro bobinage. Ce micro bobinage est parcouru par un courant électrique. Il coopère par liaison électromagnétique avec une membrane souple et magnétisée.

Ainsi, il est possible de capter et d'émettre des signaux acoustiques au moyen de ce micro bobinage et de la membrane souple magnétisée qui lui est associée.

Dans le cas où l'objet nomade comprend deux coques, entre lesquelles est inséré un micro bobinage, de préférence le procédé comprend l'étape de réaliser ladite membrane souple par impression d'une couche magnétique sur la face interne d'au moins une des coques.

L'invention concerne également un objet électronique nomade permettant d'émettre et de recevoir des signaux acoustiques. Ledit objet électronique nomade se présente sous la forme d'une carte de crédit. Ledit objet électronique nomade comprend :
- un micro bobinage plat inséré dans l'épaisseur de la carte entre deux coques constituant respectivement le dessus et le dos de la carte,
- au moins une membrane souple magnétisée coopérant par liaison électromagnétique avec le micro bobinage plat, sur la face duquel elle est posée.

De préférence, la membrane souple magnétisée est constituée par au moins une couche magnétique imprimée sur la partie de la face interne de la coque située en regard du micro bobinage.

Avantageusement, selon une variante de réalisation, ledit objet électronique nomade comporte deux couches magnétiques imprimées, situées sur chacune des deux faces internes desdites coques.

De préférence, ledit micro bobinage est logé dans un logement prévu à cet effet dans un corps de carte situé entre les deux coques.

D'autres caractéristiques et avantages de l'invention apparaîtront à la lecture de la description de variantes de réalisation de l'invention, données à titre d'exemple indicatif et non limitatif, et de :
la figure 1 présentant une vue schématique de dessus d'un objet électronique nomade, selon l'art antérieur, pouvant émettre et/ou recevoir des signaux acoustiques,
la figure 2 présentant une vue schématique de dessus d'un objet électronique nomade au sens de la présente invention,
la figure 3 présentant une vue en coupe d'un objet électronique nomade au sens la présente invention.

On va maintenant décrire les figures.

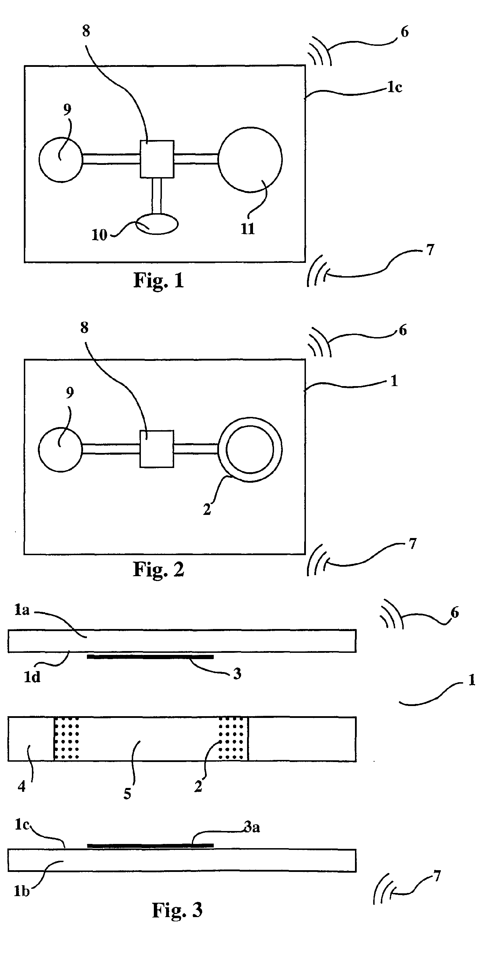

La figure 1 représente un objet électronique nomade 1c, selon l'art antérieur, au format carte de crédit. Cet objet électronique nomade 1c comporte, outre un buzzer 11 pour émettre 6 des signaux acoustiques, un microphone 10 pour capter 7 des signaux acoustiques. Ces deux composants 11 et 10 sont connectés à un microprocesseur 8. Le microprocesseur 8, le microphone 10 et le buzzer 11 sont alimentés en énergie par une pile 9.

Les figures 2 et 3 représentent un objet électronique nomade 1, au format carte de crédit, au sens de la présente invention. Cet objet électronique nomade 1 est représenté en vue schématique de dessus sur la figure 2 et en coupe sur la figure 3.

Il comporte deux coques 1a, 1b constituant respectivement la coque avant 1a et la coque arrière 1b de l'objet électronique nomade 1. Entre les deux coques 1a, 1b de cet objet électronique nomade 1, se situe un corps de carte 4, dans lequel est aménagé un logement 5.

Le buzzer 11 et le microphone 10 ont été remplacés par un composant unique : un micro bobinage 2. Ce micro bobinage 2 est inséré dans le logement 5 du corps 4 de l'objet électronique nomade 1. Il est réalisé en fils isolés adhésifs et possède un grand nombre de spires.

Le micro bobinage 2 présente la caractéristique d'être réversible. A lui seul, il peut ainsi assurer la fonction d'émission 6 et de réception 7 de signaux acoustiques. Il est connecté à un microprocesseur 8, notamment du type décrit dans le brevet n° 9306679, ci-dessus référencé. Il est alimenté en énergie par une pile 9.

Le micro bobinage 2 coopère par liaison électromagnétique avec une membrane souple magnétisée 3 ou 3a.

La membrane souple magnétisée 3 ou 3a est réalisée par impression d'une couche magnétique, soit sur la face interne ld de la coque avant la de l'objet électronique nomade 1, soit sur la face interne 1c de la coque arrière 1b de l'objet électronique nomade 1. Cette membrane souple magnétisée 3 est située en regard du micro bobinage 2.

De préférence l'impression de cette membrane souple magnétisée sera réalisée par des techniques éprouvées comme la sérigraphie ou la tempographie.

Grâce au micro bobinage 2 et à la membrane souple magnétisée 3 ou 3a qui lui est associée, l'objet nomade 1 peut ainsi à la fois capter 7 et produire 6 des signaux acoustiques.

L'objet nomade 1 peut également comporter deux membranes souples magnétisées 3 et 3a. L'une 3 est située sur la face interne Id de la coque avant 1a de l'objet électronique nomade 1. L'autre 3a est située sur la face interne 1c de la coque arrière 1b de l'objet électronique nomade 1. Les deux membranes 3 et 3a sont situées en regard du micro bobinage 2.

L'impression de deux couches magnétiques en vue de constituer deux membranes magnétisées 3 et 3a au lieu d'une seule permet de rendre symétrique la structure de l'objet nomade 1, et d'améliorer son ergonomie.

## Revendications

1. Procédé pour émettre et recevoir des signaux acoustiques au moyen d'un objet électronique nomade se présentant sous la forme d'une carte de crédit ;
ledit procédé comprenant l'étape de réaliser dans l'épaisseur (4) de la carte (1) un micro bobinage (2) parcouru par un courant électrique coopérant par liaison électromagnétique avec une membrane souple et magnétisée (3) ou (3a),
*(de sorte que qu'il est ainsi possible de capter et de produire des signaux acoustiques au moyen de ce micro bobinage et de la membrane souple magnétisée qui lui est associée).*

2. Procédé selon la revendication 1 ; ledit objet nomade (1) comprenant deux coques (1a) et (1b) entre lesquelles est inséré le micro bobinage (2) ;
ledit procédé comprenant l'étape de réaliser ladite membrane souple (3) ou (3a) par impression d'une couche magnétique sur la face interne (1c) ou (1d) d'au moins une des coques (1a) ou (1b).

3. Objet électronique nomade (1) permettant d'émettre (6) et de recevoir (7) des signaux acoustiques ; ledit objet nomade (1) se présentant sous la forme d'une carte de crédit ;
ledit objet nomade (1) comprenant :
- un micro bobinage (2) plat inséré dans l'épaisseur (4) de la carte entre deux coques (1a) et (1b) constituant respectivement le dessus (la) et le dos (1b) de la carte,
- au moins une membrane souple magnétisée (3) ou (3a) coopérant par liaison électromagnétique avec le micro bobinage (2) plat, sur la face duquel elle est posée.

4. Objet électronique nomade (1) selon la revendication (3) tel que la membrane souple magnétisée (3) ou (3a) est constituée par au moins une couche magnétique imprimée sur la partie de la face interne (1c) ou (1d) de la coque (1a) ou (1b) située en regard du micro bobinage (2).

5. Objet électronique nomade (1) selon la revendication (3) tel qu'il comporte deux couches magnétiques imprimées, situées sur chacune des deux faces internes (1c) et (1d) desdites coques (1a) et (1b).

6. Objet électronique nomade (1) selon l'une quelconque des revendications (3) à (5) tel que ledit micro bobinage (2) est logé dans un logement (5) prévu à cet effet dans un corps (4) de carte situé entre les deux coques (1a) et (1b).
